# EUROPEAN PATENT APPLICATION

(11) **EP 3 973 766 A1**
(43) Date of publication of application: **30.03.2022**
(21) Application number: 21198962.9
(22) Date of filing: 24.09.2021
(51) Int. Cl.: A01G 3/053

(54) **HEDGE TRIMMER**

(30) Priority: 24.09.2020 JP 2020160010
(71) Applicant: Yamabiko Corporation, Ohme-shi Tokyo 198-8760 (JP)
(72) Inventor: KODAMA, Hisao, Tokyo, 198-8760 (JP); SHIMIZU, Kunio, Tokyo, 198-8760 (JP); KONO, Toru, Tokyo, 198-8760 (JP)
(74) Representative: Dehns

(57) **Abstract**

Provided is a hedge trimmer (1) including an electric motor (50), a blade (20) disposed ahead of the electric motor (50), and a body case (10) housing the electric motor (50). The electric motor (50) includes a stator (51) equipped with coils (51a) and an outer rotor (52) which has a circumferential wall portion (52a) surrounding an outer circumference of the stator (51), the circumferential wall portion (52a) being equipped with magnets (52c) . The outer rotor (52) is rotatably supported by the stator (51) and connected to the blade (20) via a driving transmission mechanism (60). The blade (20) reciprocates according to the rotation of the outer rotor (52).

## Description

### BACKGROUND OF THE INVENTION

### 1. Technical Field

The present invention relates to a hedge trimmer.

### 2. Description of Background Art

As a hedge trimmer (trimming machine) to be used for trimming or pruning hedges and plants, there is provided one which reciprocates a blade by using an inner rotor type electric motor (for example, see Patent Literature 1).

The inner rotor type electric motor includes a stator having coils and an inner rotor which is inserted through the stator and provided with magnets, and the inner rotor is rotatably supported by the stator.

Patent Literature 1: US9220201 B2

### BRIEF SUMMARY OF THE INVENTION

When the blade of a hedge trimmer is brought into contact with a considerably thicker branch than other branches without the worker's intention during trimming work with use of the hedge trimmer, there is sometimes a case where the blade stops because of a low output of the electric motor. In order to prevent the blade of a conventional hedge trimmer from being stopped, an electric motor having a high output may be used. However, the electric motor of this case is large and heavy, so that the power consumption thereof is large. As another workaround, the gear ratio may be increased between the electric motor and the blade. But, in this case, since the driving speed of the blade is lowered, the performance of cutting branches becomes lower and the gear is large, so that the driving mechanism is also large and heavy.

As described above, in a case of pruning a thick branch with use of a hedge trimmer equipped with a conventional inner rotor type electric motor, the whole device (tool) is large and heavy.

It is an object of at least the preferred embodiments of the present invention to provide a hedge trimmer capable of suppressing the problem that driving of the blade is stopped when the load on the electric motor is large like a case of trying to prune a thick branch.

The present invention provides a hedge trimmer including an electric motor, a blade disposed ahead of the electric motor and a body case housing the electric motor. The electric motor includes a stator equipped with coils and an outer rotor which has a circumferential wall portion surrounding an outer circumference of the stator, the circumferential wall portion being equipped with magnets. The outer rotor is rotatably supported by the stator and connected to the blade via a driving transmission mechanism. The blade reciprocates according to rotation of the outer rotor.

The hedge trimmer of the present invention adopts an outer rotor type electric motor which can store larger rotational energy compared to an inner rotor type electric motor even in a case where the rotational speed thereof is the same as that of an inner rotor type electric motor, thereby a large torque is generated by the rotational energy stored in the outer rotor even in a case where the rotational speed of the electric motor is lowered instantaneously when the electric motor is overloaded in a case where a thick branch is pruned or the like. Therefore, a thick branch can be pruned.

### BRIEF DESCRIPTION OF THE SEVERAL VIEWS OF THE DRAWINGS

Certain preferred embodiments of the present invention will now be described in greater detail by way of example only and with reference to the accompanying drawings, in which:
FIG. 1 is a perspective view showing a hedge trimmer according to an example embodiment of the present invention;
FIG. 2 is a side view showing the hedge trimmer according to the example embodiment of the present invention; and
FIG. 3 is a side cross sectional view showing the hedge trimmer according to the example embodiment of the present invention.

### DETAILED DESCRIPTION OF THE INVENTION

An example embodiment of the present invention will be described in detail appropriately with reference to the attached drawings.

In the following description, upper-lower, front-rear and left-right directions are set for the sake of convenience to explain a hedge trimmer of the embodiment of the present invention, so the structure and the use of the hedge trimmer are not limited by those.

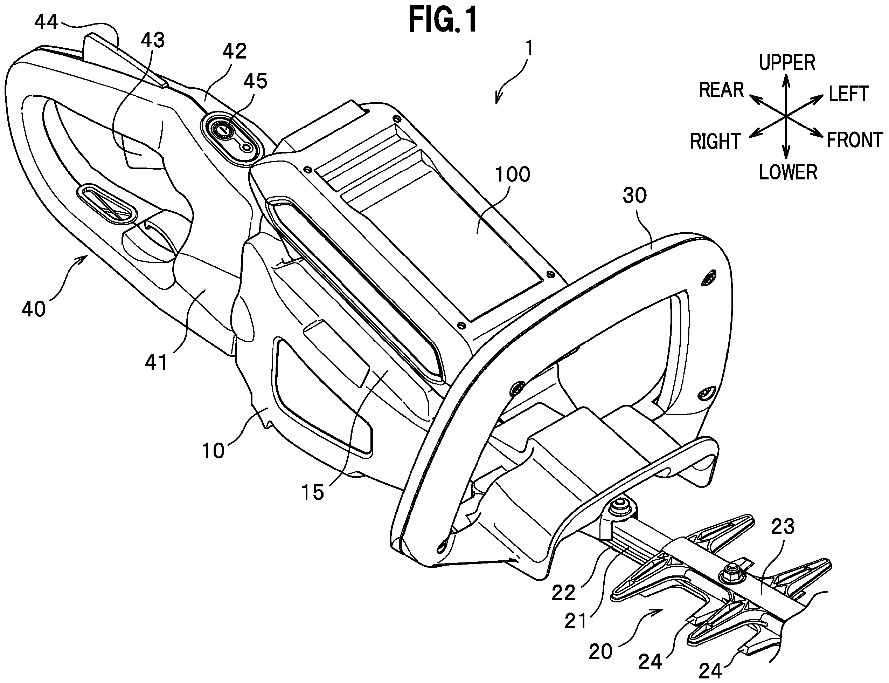

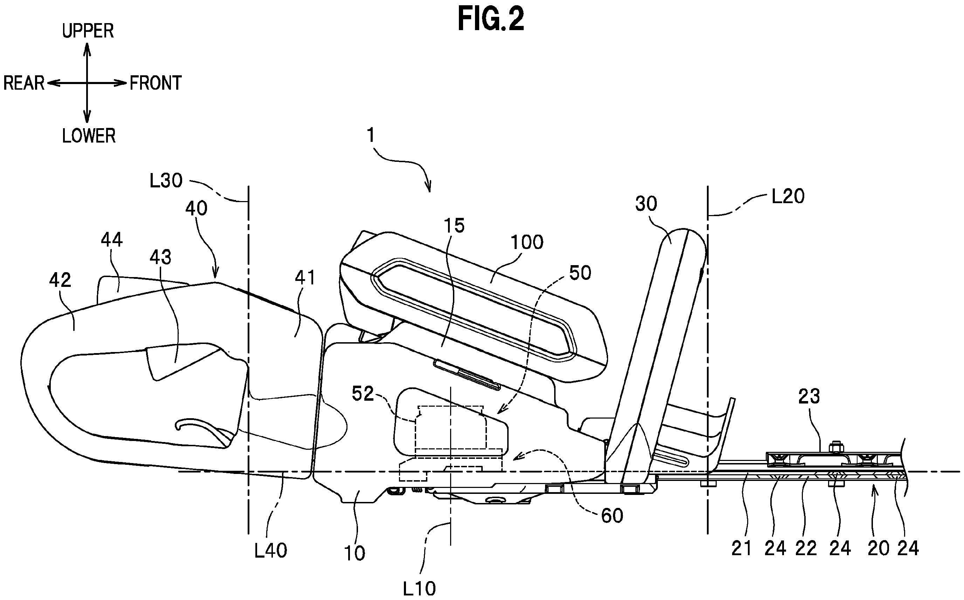

The hedge trimmer 1 of this embodiment is a handheld small cutting machine to be used for trimming or pruning hedges and/or plants as shown in FIG. 1, and is provided with a battery 100 for electrically driving. The hedge trimmer 1 is provided with an electric motor 50, a blade 20 disposed ahead of the electric motor 50, and a body case 10 housing the electric motor 50 as shown in FIG. 2.

The body case 10 is a box made of resin, and an upper face thereof inclines relative to a lower face thereof. The upper face of the body case 10 inclines to lower with increasing distance from a rear side thereof toward a front side thereof. That is, the front portion of the body case 10 is formed to be lower than the rear portion thereof. Further, the body case 10 is formed to have the shape of an approximate triangle in a side view.

A battery attachment portion 15, to which the battery 100 is attached, is provided on the upper face of the body case 10. The battery attachment portion 15 inclines to lower with increasing distance from a rear portion thereof toward a front portion thereof so as to match the upper face of the body case 10. "Match" means, for example, to have the same inclined angle or substantially the same inclined angle.

The battery 100 is a conventional known battery which houses a rechargeable battery such as a lithium-ion storage battery in a rectangular case lengthened in a front-rear direction.

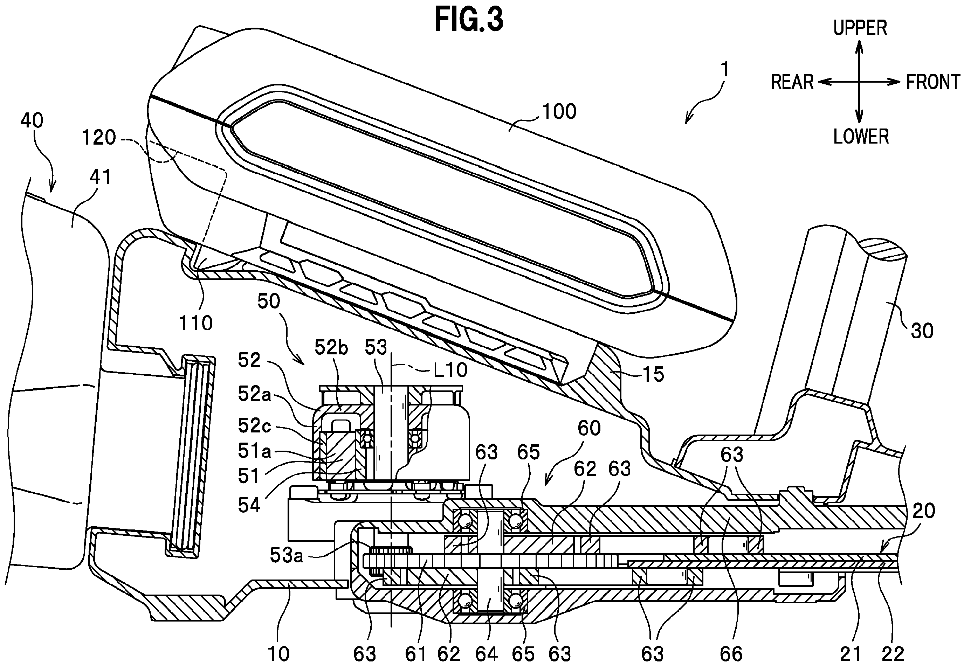

As shown in FIG. 3, an engagement portion 110, which is a portion to engage with the battery attachment portion 15, is provided so as to project from a rear end portion of a lower face of the battery 100.

When the battery 100 is attached to the battery attachment portion 15, a lower portion of the battery 100 is fitted into the battery attachment portion 15 while sliding the battery 100 along the battery attachment portion 15 from a rear side of the battery attachment portion 15 toward a front side thereof. When the front end portion of the battery 100 reaches a position to be supported by the front end portion of the battery attachment portion 15, the engagement portion 110 of the battery 100 is engaged with the battery attachment portion 15, so that the battery 100 is fixed to the battery attachment portion 15.

The battery 100 attached to the battery attachment portion 15 inclines to lower with increasing distance from the rear side to the front side thereof, so that the front portion of the battery 100 is lower than the rear portion thereof.

Metal connecting terminals (not shown) are provided on the upper face of the battery attachment portion 15. The connecting terminals are electrically connected to a control board (not shown) and the electric motor 50. Connecting terminals of the battery 100 are connected to the connecting terminals of the battery attachment portion 15, thereby power is supplied to the control board and the electric motor 50 from the battery 100.

When the battery 100 is removed from the battery attachment portion 15, a connecting lever 120, which is provided at the rear end portion of the battery 100, is pulled up, thereby the engagement between the battery attachment portion 15 and the engagement portion 110 is released, so that the battery 100 becomes slidable rearward along the battery attachment portion 15.

As shown in FIG. 1, a front handle 30 is provided at the front end portion of the body case 10. The front handle 30 is disposed ahead of the battery 100 attached to the battery attachment portion 15.

The front handle 30 has a horizontal portion lengthened in a left-right direction and left and right vertical portions lengthened downward respectively from the left and right ends of the horizontal portion. Both lower end portions of the vertical portions are fixed to the front end portion of the body case 10.

A rear handle 40 is provided at the rear end portion of the body case 10. The rear handle 40 has a connecting portion 41 connected to the rear end portion of the body case 10, and a grip portion 42 having a through opening extending in the left-right direction. A worker grips the rear handle 40 in a state where his/her hand is inserted in the opening of the grip portion 42 when he/she holds the hedge trimmer 1.

As shown in FIG. 3, the connecting portion 41 of the rear handle 40 is connected to the rear end portion of the body case 10 in a state where the connecting portion 41 is capable of rotating around an axis approximately in the front-rear direction. Thereby, the whole of the rear handle 40 is rotatable around the axis approximately in the front-rear direction with respect to the body case 10.

As shown in FIG. 1, a trigger lever 43, which is an operation device to drive the blade 20 in a state where the worker grips the rear handle 40, is provided on the inner periphery portion of the grip portion 42 of the rear handle 40. Further, on the upper face of the grip portion 42, a power switch 45 and a lock release lever 44 to release the locked state of the trigger lever 43 are provided.

As shown in FIG. 2, the blade 20 is straightly extended forward with respect to the electric motor 50, and projected forward from the front end portion of the body case 10. The blade 20 is a conventional known cutting tool having a metal upper blade 21 and lower blade 22 and a resin cover 23.

The upper blade 21 and the lower blade 22 are stacked one above the other. As shown in FIG. 1, each of the upper blade 21 and the lower blade 22 has a plurality of cutting blades 24 projected in the left and right direction. The cover 23 is a protecting member to prevent a hand of the worker from being brought into contact with the blade 20, and covers the upper face of the upper blade 21.

As shown in FIG. 3, rear end portions of the upper blade 21 and the lower blade 22 are inserted into the body case 10. The rear end portions of the upper blade 21 and the lower blade 22 are connected to the electric motor 50 via a driving transmission mechanism 60.

The driving transmission mechanism 60 includes a blade driving gear 61, upper and lower movable plates 63, 63 and upper and lower cams 62, 62 provided on the blade driving gear 61.

The blade driving gear 61 is a disc gear and a support shaft 64 is projected upward and downward from the central portion of the gear 61. The upper end portion and the lower end portion of the support shaft 64 are rotatably supported by upper and lower bearings 65, 65 disposed in the body case 10. That is, the blade driving gear 61 can be rotated around the axis of the support shaft 64.

The upper and lower cams 62, 62 are projected on the upper face and the lower face of the blade driving gear 61, respectively. Each cam 62 is disposed at an eccentric position with respect to the rotational center (central axis) of the blade driving gear 61.

The upper cam 62 is inserted into an opening formed in a rear end portion of the upper movable plate 63 and a front end portion of the upper movable plate 63 is connected to a rear end portion of the upper blade 21.

The lower cam 62 is inserted into an opening formed in a rear end portion of the lower movable plate 63 and a front end portion of the lower movable plate 63 is connected to a rear end portion of the lower blade 22.

In the driving transmission mechanism 60, the upper and lower cams 62, 62 are rotated according to the rotation of the blade driving gear 61, thereby the upper and lower movable plates 63, 63 reciprocate in the front-rear direction. The upper blade 21 and the lower blade 22 are configured so that they reciprocate in respective directions which are opposite to each other and in the front-rear direction.

The electric motor 50 includes a stator 51, an outer rotor 52, an output shaft 53, and a base member 54.

The stator 51 is equipped with a plurality of coils 51a. A lower end portion of the base member 54 is fixed to a case 66 of the driving transmission mechanism 60.

The output shaft 53 is inserted through a bearing disposed on an inner circumferential face of the base member 54. Thereby, the output shaft 53 is rotatably supported by the base member 54.

The output shaft 53 is inserted through the bearing disposed on an inner circumferential face of the stator 51 including the base member 54. Thereby, the output shaft 53 is rotatably supported by the stator 51.

An output gear 53a is attached to a lower end portion of the output shaft 53. The output gear 53a is engaged with a blade driving gear 61 of the driving transmission mechanism 60.

The outer rotor 52 has a tubular circumferential wall portion 52a and a top portion 52b, the circumferential wall portion 52a enclosing the stator 51 and the coils 51a, the top portion 52b closing an upper opening of the circumferential wall portion 52a. The outer rotor 52 of this embodiment is made of iron, but the material of the outer rotor of the invention is not specially limited. A plurality of magnets 52c are attached to an inner circumferential face of the circumferential wall portion 52a.

An upper end portion of the output shaft 53 is connected to a central portion of the top portion 52b of the outer rotor 52. Thereby, the outer rotor 52 is rotatably supported by the stator 51, so that the output shaft 53 and the outer rotor 52 rotate together.

A rotational axis L10 of the output shaft 53 and the outer rotor 52 is extended in an upper-lower direction orthogonal to a lengthened direction (front-rear direction) of the blade 20.

The outer rotor 52 is configured to have a diameter (lateral direction) larger than a length in the direction (upper-lower direction) along the rotational axis L10. That is, the outer rotor 52 is configured so that in a side view (view in a direction orthogonal to the rotational axis L10), the width thereof is larger than the height thereof to be flat shape.

The outer rotor 52 is rotatably supported by the stator 51 and connected to the rear end portion of the blade 20 via the driving transmission mechanism 60. In a case where the coils 51a of the stator 51 are energized by the battery 100, the output shaft 53 and the outer rotor 52 are rotated, and this driving force is transmitted to the blade 20 via the driving transmission mechanism 60, so that the upper blade 21 and the lower blade 22 reciprocate in the front-rear direction.

As shown in FIG. 2, in the hedge trimmer 1 of the embodiment, the blade 20 is attached at a position below the outer rotor 52 in the direction along the rotational axis L10. The electric motor 50 is disposed between a front end L20 of the front handle 30 and a front end L30 of the grip portion 42 of the rear handle 40, and is located at a position in the body case 10 inward than an upper end L40 of a virtual front-rear extension area of the blade 20.

As shown in FIG. 3, in the hedge trimmer 1 of the embodiment, the battery attachment portion 15 is located at a position above the outer rotor 52 in the direction along the rotational axis L10, and the blade 20 is attached at a position below the outer rotor 52 in the direction along the rotational axis L10. The outer rotor 52 is housed in a zone between the battery attachment portion 15 and the upper end L40 of the virtual front-rear extension area of the blade 20.

As shown in FIG. 2, the hedge trimmer 1 of the embodiment described above includes the electric motor 50, the blade 20 disposed ahead of the electric motor 50, and the body case 10 housing the electric motor 50. As shown in FIG. 3, the electric motor 50 includes the stator 51 having the coils 51a and the outer rotor 52 which has the circumferential wall portion 52a surrounding an outer circumference of the stator 51 and the magnets 52c attached to the circumferential wall portion 52a. The outer rotor 52 is rotatably supported by the stator 51 and connected to the blade 20 via the driving transmission mechanism 60. Therefore, the blade 20 reciprocates according to the rotation of the outer rotor 52.

In the hedge trimmer 1 of the embodiment, even when an overload acts on the blade 20 to lower the rotational speed of the electric motor 50 instantaneously, a large torque is generated on the output shaft 53 because of the rotational energy accumulated in the outer rotor 52, so that a thick branch can be pruned. That is, the hedge trimmer 1 can be made smaller and lighter.

In the handheld hedge trimmer 1, the output of the electric motor 50 becomes small due to the weight and size, but since the inertia force of the outer rotor 52 is added, the cutting performance of the blade 20 can be improved. In this way, the hedge trimmer 1 is suitable for a small and light handheld working machine. It is particularly suitable when working is done while changing the angle (direction) of the blade 20 variously.

In the hedge trimmer 1 of the embodiment, the blade 20 has a portion lengthened in the front-rear direction. The rotational axis L10 of the outer rotor 52 is extended in a direction orthogonal to the front-rear direction. The outer rotor 52 is configured to have a ratio of equal to or larger than 1, the ratio being a ratio of a length (in the embodiment, diameter of the outer rotor 52) in a direction orthogonal to the rotational axis L10 relative to a length in a direction along the rotational axis L10.

In this way, since the outer rotor 52 is configured to be flat in a side view, a space to dispose the electric motor 50 can be made small in the upper-lower direction. Therefore, the hedge trimmer 1 can be made small. Further, since the body case 10 is made small in the upper-lower direction and the battery 100 is disposed low, the stability of the hedge trimmer 1 can be improved.

Furthermore, by configuring the outer rotor 52 to be flat, the outer rotor 52 can accumulate a larger rotational energy.

As shown in FIG. 2, the hedge trimmer 1 of the embodiment is provided with the front handle 30 in front of the body case 10, and the rear handle 40 behind the body case 10. Further, the blade 20 is attached in a zone which is in a front portion of the body case 10 and below the outer rotor 52 in a direction along the rotational axis L10. And further, the electric motor 50 is disposed between the front end L20 of the front handle 30 and the front end L30 of the grip portion 42 of the rear handle 40, and is located at a position in the body case 10 inward than the upper end L40 of a virtual front-rear extension area of the blade 20.

In this configuration, a space between the front handle 30 and the rear handle 40 is efficiently used to dispose the electric motor 50. Thereby, the body case 10 can be made small.

Further, the heavy electric motor 50 is disposed between the front handle 30 and the rear handle 40, so that the weight balance of the hedge trimmer 1 is good. Therefore, the worker is easy to handle the hedge trimmer 1 in a state where he/she grips the front handle 30 and the rear handle 40, so that the efficiency and accuracy of work can be improved.

Especially when finishing of pruning plants is performed with use of the hedge trimmer 1, the weight balance of the hedge trimmer 1 is one important element of the workability for the worker. Furthermore, configuring the outer rotor 52 to be flat in a side view makes a better weight balance of the hedge trimmer 1 and makes a space for gripping the front handle 30 larger, so that the workability can be more improved.

In the hedge trimmer 1 of the embodiment, the blade 20 is attached at a position below the outer rotor 52 in a direction along the rotational axis L10. The upper face of the body case 10, which is on an upper side in a direction along the rotational axis L10 of the outer rotor 52, inclines toward a lower side in a direction along the rotational axis L10 with increasing distance from a rear portion toward a front portion thereof. For this reason, the body case 10 is configured to be approximately triangle in a side view.

This configuration keeps a space to house the electric motor 50 in the body case 10 and can make the body case 10 small. Further, a space for gripping the front handle 30 is increased, the workability for the worker is more improved. Furthermore, configuring the outer rotor 52 to be flat in a side view makes a space for gripping the front handle 30 larger, so that the workability can be more improved.

As shown in FIG. 2, in the hedge trimmer 1 of the embodiment, the battery attachment portion 15 is disposed at a position above the outer rotor 52 in a direction along the rotational axis L10.

In this way, by disposing the electric motor 50 with an effective using of a space between the battery attachment portion 15 and the attached position of the blade 20, the body case 10 can be made smaller.

Further, when the battery 100 is attached to the body case 10, a space for gripping the front handle 30 can be fully kept, and the battery 100 can be easily attached and removed by sliding the battery 100 along the battery attachment portion 15 from the rear side toward the front side or from the front side toward the rear side. And further, by making the body case 10 thinner in the upper-lower direction to dispose the battery 100 at a lower position, the stability of the hedge trimmer 1 can be improved.

The outer rotor 52 of the embodiment is made of iron, so that the mass of the outer rotor 52 is larger than that in a case where it is made of aluminum alloy or magnesium alloy. Therefore, the rotational energy to be accumulated in the outer rotor 52 is larger. For this reason, even when the electric motor 50 is overloaded during trying to prune a thick branch to cause the electric motor 50 to lower the rotational speed thereof instantaneously, the electric motor 50 generates a large torque, so that the thick branch can be pruned.

Further, in a case where the output shaft 53 of the outer rotor 52 made of iron is also made of iron, a large torque generated by a large rotational energy can be surely transmitted.

And further, in a case where the outer rotor 52 is made of iron like the embodiment, since iron is a magnetic material with high specific density capable of accumulating a large rotational energy, it is not necessary to dispose a ring made of iron at the circumferential wall portion 52a to generate a magnetic path of the magnets 52c.

In the hedge trimmer 1 of the embodiment, the rear end portion of the blade 20 is connected to the outer rotor 52. The blade 20 is lengthened forward with respect to the electric motor 50, and reciprocates in the front-rear direction. Thus, the hedge trimmer 1 having the straight blade 20 can be made smaller and the cutting performance of the blade 20 can be improved. Especially when finishing of pruning plants is performed with use of the hedge trimmer 1, the weight balance of the hedge trimmer 1 is one important element of the workability for the worker.

In the above, the embodiment of the present invention has been described as an example, but the present invention is not limited to the embodiment and can be appropriately changed in a range of not deviating the purpose.

As shown in FIG. 3, the output shaft 53 connected to the outer rotor 52 of the electric motor 50 of the embodiment is connected to the blade 20 via the driving transmission mechanism 60, but the mechanism to transfer the driving force of the outer rotor 52 to the blade 20 is not particularly limited.

In the hedge trimmer 1 of the embodiment, the battery attachment portion 15 is disposed above the outer rotor 52 and the blade 20 is disposed below the outer rotor 52, but positions of the battery attachment portion 15 and the blade 20 are not particularly limited.

As shown in FIG. 1, the blade 20 of the hedge trimmer 1 of the embodiment is lengthened straightly forward, and the upper blade 21 and the lower blade 22 are configured to reciprocate in the front-rear direction. However, the blade configuration is not particularly limited. For an example, as one example of a modified blade, a blade lengthened in the left-right direction is provided at a front end portion of a straight portion lengthened forward from the electric motor 50, so that a T-shaped blade, which reciprocates in the left-right direction, may be used.

As shown in FIG. 2, in the hedge trimmer 1 of the embodiment, the upper face of the body case 10 and the battery attachment portion 15 incline downward with increasing distance from the rear portion toward the front portion, but the upper face of the body case 10 and the battery attachment portion 15 do not have to be inclined.

The outer rotor 52 of the hedge trimmer 1 of the embodiment is made of iron and has a circular shape, but a material and a shape of the outer rotor 52 are not particularly limited.

In the hedge trimmer 1 of the embodiment, electric power is supplied to the control board and the electric motor 50 from the battery 100. However, without use of the battery 100, electric power may be supplied to the control board and the electric motor 50 from an external power source via a power cord.

### DESCRIPTION OF REFERENCE SYMBOLS

- 1: Hedge trimmer
- 10: Body case
- 15: Battery attachment portion
- 20: Blade
- 21: Upper blade
- 22: Lower blade
- 23: Cover
- 24: Cutting blade
- 30: Front handle
- 40: Rear handle
- 41: Connecting portion
- 42: Grip portion
- 50: Electric motor
- 51: Stator
- 51a: Coil
- 52: Outer rotor
- 52a: Circumferential wall portion
- 52b: Top portion
- 52c: Magnet
- 53: Output shaft
- 53a: Output gear
- 54: Base member
- 60: Driving transmission mechanism
- 61: Blade driving gear
- 62: Cam
- 63: Movable plate
- 64: Support shaft
- 65: Bearing
- 100: Battery
- 110: Engagement portion
- 120: Connecting lever
- L10: Rotational axis

## Claims

1. A hedge trimmer (1) comprising an electric motor (50), a blade (20) disposed ahead of the electric motor and a body case (10) housing the electric motor,
wherein the electric motor comprises a stator (51) equipped with coils (51a) and an outer rotor (52) which has a circumferential wall portion (52a) surrounding an outer circumference of the stator, the circumferential wall portion being equipped with magnets (52c),
wherein the outer rotor is rotatably supported by the stator and connected to the blade via a driving transmission mechanism (60), and
wherein the blade reciprocates according to rotation of the outer rotor.

2. The hedge trimmer according to claim 1, wherein the hedge trimmer is a handheld type.

3. The hedge trimmer according to claim 1 or 2,
wherein the blade (20) has a portion lengthened in a front-rear direction,
wherein a rotational axis (L10) of the outer rotor (52) extends in a direction orthogonal to the front-rear direction, and
wherein the outer rotor is configured to have a ratio of equal to or larger than 1, the ratio being a ratio of a first length in a direction orthogonal to the rotational axis relative to a second length in a direction along the rotational axis.

4. The hedge trimmer according to claim 2 or 3, further comprising a front handle (30) at a front portion of the body case (10) and a rear handle (40) at a rear portion of the body case,
wherein the blade (20) is attached at a position on one side or the other side of the outer rotor (52) in a direction along a rotational axis of the outer rotor, the position being in a front portion of the body case, and
wherein the electric motor (50) is disposed between a front end of the front handle and a front end of a grip portion (42) of the rear handle and is located at a position in the body case inward than a virtual front-rear extension area of the blade.

5. The hedge trimmer according to claim 4,
wherein the blade (20) is attached at the position on the other side in the direction along the rotational axis (L10) of the outer rotor (52), and
wherein an outer face of the body case (10) on the one side in the direction along the rotational axis (L10) of the outer rotor (52)inclines toward the other side in the direction along the rotational axis of the outer rotor with increasing distance from a rear portion toward a front portion thereof.

6. The hedge trimmer according to claim 4 or 5,
wherein a battery attachment portion (15) to attach a battery (100) is formed at a portion of the body case (10) on the one side in the direction along the rotational axis (L10) of the outer rotor (52) .

7. The hedge trimmer according to any preceding claim,
wherein the outer rotor (52) is made of iron.

8. The hedge trimmer according to any preceding claim,
wherein a rear end portion of the blade (20) is connected to the outer rotor (52), and
wherein the blade is extended forward with respect to the electric motor (50) and is configured to reciprocate in a front-rear direction.
